## Europäisches Patentamt

## European Patent Office

## Office européen des brevets

(11) Publication number: **0 005 278**
**B1**

(12) **EUROPEAN PATENT SPECIFICATION**

(45) Date of publication of patent specification: **19.12.84**

(51) Int. Cl.[3]: **B 29 D 23/12, F 16 L 11/12**

(21) Application number: **79101407.9**

(22) Date of filing: **08.05.79**

(54) Helically fabricated flexible hose and mandrel device for producing the same.

(30) Priority: **10.05.78 US 903772**
**09.11.78 US 958994**

(43) Date of publication of application:
**14.11.79 Bulletin 79/23**

(45) Publication of the grant of the patent:
**19.12.84 Bulletin 84/51**

(84) Designated Contracting States:
**AT BE CH DE FR NL SE**

(56) References cited:
**AT-B- 309 372**
**DE-A-1 928 201**
**DE-A-2 700 018**
**DE-A-2 710 384**
**DE-A-2 804 652**
**DE-B-1 184 938**
**DE-B-1 236 149**
**DE-B-1 779 535**
**DE-B-1 929 926**
**DE-C- 728 910**
**DE-C- 735 112**
**DE-C-1 120 682**
**FR-A-2 161 824**

(73) Proprietor: **Automation Industries, Inc.**
**1901 Building Century City**
**Los Angeles California 90067 (US)**

(72) Inventor: **Hall, Marcus A.**
**9 Tipping Drive**
**Branford Connecticut 06405 (US)**
Inventor: **Kutnyak, Thomas A.**
**101 Coventry Drive**
**Greenwood South Carolina 29646 (US)**
Inventor: **Koerber, Marvin A.**
**213 Ferry Street**
**Abbeville South Carolina 29620 (US)**

(74) Representative: **von Füner, Alexander, Dr. et al**
**Patentanwälte v. Füner, Ebbinghaus, Finck**
**Mariahilfplatz 2 & 3**
**D-8000 München 90 (DE)**

(56) References cited:
**GB-A-1 267 612**
**US-A-2 890 264**
**US-A-3 155 559**
**US-A-3 636 285**
**US-A-3 928 715**
**US-A-3 972 578**
**US-A-3 979 250**

Courier Press, Leamington Spa, England.

## Description

The invention relates to a helically fabricated flexible hose of the kind comprising first and second parallel helical wires disposed in double lead fashion with successive convolutions alternating and an inner plastic strip wrapped helically about the tubular extent defined by the convolutions of the wires and being wider than the double lead of each wire. The invention also relates to a continuously advancing definite length mandrel device for making the same, the mandrel device being of the kind comprising a frame, a tubular mandrel core axially rotatable with respect thereto, drive means for rotating said core, a plurality of closed loop belts each having portions wrapped helically about said core in multiple lead fashion with their convolutions defining a mandrel surface, whereby as the core is rotated additional convolutions of said belts are drawn onto one end thereof, feeding means on said frame for urging all of said convolutions toward the opposite end of said core, means associated with the belt convolutions for maintaining them in a sliding fit about the core, and a belt guide at the opposite end of the core fixed with respect to the frame for collapsing the successive convolutions inwardly and returning each belt through the inside of the core toward the first mentioned end thereof, said guide being formed with a plurality of grooves of generally helical configuration for receiving the respective plurality of belts.

A helically fabricated flexible hose of the kind referred to is known from AT—B—309 372. The wires of such a hose are arranged side-by-side, defining a pair of helical wires, and forward and rearward edge portions of the inner plastic strip overlap one another in the region between the convolutions of the pair of wires. The inner plastic strip is covered by helical and longitudinal reinforcing cords and an outer plastic strip is wrapped helically about the reinforcing cords and bonded to the inner plastic strip. The width of the outer plastic strip is selected so that it covers three successive convolutions. The outer plastic strip overlaps itself twice above the convolutions and once between the convolutions so that it defines three plies above the convolutions and two plies between the convolutions. The outer and inner plastic strips together with the reinforcing cords define a multi-ply-wall of uniform thickness. Such a hose has a single lead, rather than a double lead, structure and hence the total amount of wire is quite large, resulting not only in added weight but in an increase of voltage drop as well. Furthermore, its abrasive resistance is less than satisfactory, particularly on the raised convolutions of the pair of wires.

A helically fabricated flexible hose comprising first and second parallel helical wires disposed in double lead fashion with successive convolutions of equal diameter alternating and equally spaced is known from DE—B—1 236 149. The wire convolutions of such a hose are covered by a single ply wall of flexible plastic. A hose of this form is typically somewhat stiff and has less than satisfactory abrasive resistance, particularly on the raised convolutions of the wires.

A continuously advancing definite length mandrel device of the kind referred to is known from US—A—3 155 559.

It was recognized from the outset that the helically fabricated tubing made on such a mandrel would have a helical lead or pitch equal to the lead or pitch of the single belt. Therefore, it was suggested in the prior art patent itself that two or more belts could be wrapped around the core and passed around a multiple groove device so that the mandrel surface would advance further at each revolution of the core. However, there is a danger for the plurality of belts in the mandrel device of the kind referred to, to be subjected to unequal drag which may cause the forward belt to wear out and probably break before the rearward belt.

An object of the invention is to provide a helically fabricated flexible hose of the kind referred to, which hose is of maximum flexibility and abrasion resistance, optimum longitudinal and radial strength, and minimal wire weight and voltage resistance.

Another object of the invention is to provide a continuously advancing definite length mandrel device of the kind referred to, which device is as free as possible of unequal drag and friction on its plurality of belts.

According to one aspect of the invention there is provided a helically fabricated flexible hose of the kind referred to, the hose being characterized in that forward and rearward edge portions of said inner plastic strip overlap one another above the convolutions of the first of said wires, and an outer plastic strip is wrapped helically about said inner plastic strip and is wider than the double lead of each wire with forward and rearward edge portions of said outer plastic strip overlapping one another above the convolutions of the second of said wires. In a preferred form a plastic dielectric coating is disposed about each wire and a plurality of reinforcing cords are located about the inner plastic strip and inside the outer plastic strip, the plastic coating and the two strips all being bonded together.

It is characteristic of this structure that each wire convolution is covered by three wall plies, two from one strip and one from the other, with only two wall plies between the wire convolutions, thus imparting markedly better abrasion resistance at the raised convolutions where the greatest wear occurs. Unlike the single lead double-wire hose, the hose according to the invention is of uniform double lead double-wire form so that the amount of wire per unit length of hose is at a minimum. Each wire helic flexes independently of the other and the structure therefore possesses exceptional flexibility allowing it to drape readily with close bend radius, all of which is important for vacuum cleaner hoses.

According to another aspect of the invention there is provided a continuously advancing definite length mandrel device of the kind referred to, the device being characterized in that said grooves are all of the same length along there center lines and are so symmetrically disposed about the guide as to provide an axial spacing between adjacent grooves that increases towards the outer end of the guide in such a way that the outlets of the grooves are equally spaced apart in a circumferential direction around said guide.

In a preferred form of the improved apparatus, two belts are provided and consequently two grooves are formed in the belt guide. Not only are the two grooves of equal length but they are disposed symmetrically on opposite sides of the guide. As each pair of adjoining convolutions of the first and second belts approaches the guide the first belt convolution of the pair enters the first groove a half turn of the core before the second belt convolution enters the second groove. Each belt travels exactly the same distance around the belt guide and friction in the respective grooves is therefore substantially equal. It is characteristic of this design that a given point on the first or lead belt moves ahead of a corresponding point on the second or following belt with which it had been paired during translation as a mandrel surface. This movement ahead is equal to half the circumference of the mandrel surface.

For making an indefinite length helically fabricated flexible hose from at least one extended fabricating element an elongated circumferentially complete mandrel surface is continuously formed, continuously translated in a longitudinal direction, continuously collapsed at the end thereof which is forward in relation to the direction of translation, and continuously replaced at that end thereof which is rearward in relation to the direction of translation. The extended fabricating element is continuously applied adjacent the rearward end of the mandrel surface so that it advances continuously from the forward end of the mandrel surface in the form of the article. This method comprises forming the circumferentially complete mandrel surface by arranging a pair of flexible closed-loop belts helically in multiple lead fashion with their alternating convolutions adjoining and defining the mandrel surface, with the first belt leading and the second belt following in the alternating convolutions and with a hollow space defined axially within the convolutions. The method provides for collapsing the mandrel surface by directing the first belt convolutions off the mandrel surface at the forward end thereof prior to directing the second belt convolutions off the mandrel surface at the forward end thereof. The belts are returned in paths of equal length from the mandrel surface rearwardly into the hollow space.

Other objectives and advantages of the invention will become apparent in the following description taken in conjunction with the accompanying drawings.

Fig. 1 is an elevation, partly broken away, of a double-belt form of the improved mandrel device;

Fig. 2A is an enlarged elevation, partly broken away and in section, of the outer end portion of the mandrel;

Fig. 2B is a continuation of Fig. 2A showing the inner end portion of the mandrel and associated frame;

Fig. 3 is an end view of the outer end of the mandrel with one of the two belts in section;

Fig. 4 is an exploded view, partly in section, showing the structure of the outer end of the mandrel without the belts;

Fig. 5 is an elevation of one side of the belt guide without the belts;

Fig. 6 is an elevation of the other side of the belt guide; and

Fig. 7 is a schematic illustration showing the formation of a helically fabricated tube on the double-belt mandrel of the invention;

Fig. 8 is an elevation partly broken away of a dual wire hose of the invention; and

Fig. 9 is an enlarged section of the wall of the hose.

The mandrel apparatus of the invention includes a stationary frame 10 on which are mounted a pair of aligned bearings 11 and 12. An elongated tubular mandrel core 13 is rotatably supported in these bearings and has a drive pulley 14 mounted at one end. The drive pulley 14 is driven by a drive belt 15 which in turn is driven by a suitable electric motor, not shown, which is the primary source of the drive system. Located concentrically within the core 13 and extending through its length is a support tube 16 which is fixed at one end to the frame 10 by a mount 17. When the pulley 14 is driven the mandrel core 13 rotates axially in the bearings 11 and 12 about the support tube 16.

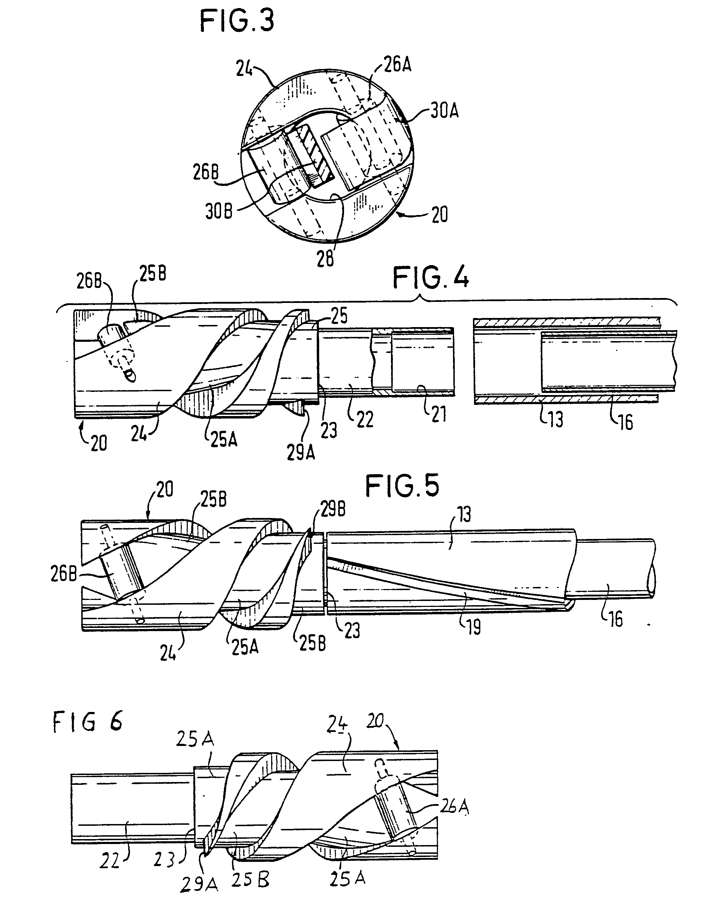

A plurality of drive teeth 18 are formed about the core 13 adjacent the frame 10. On the surface of the core is a long helically disposed key 19 extending from one of the teeth 18 to the opposite end of the core. A guide device 20 is attached to the end of the supporting tube 16. In Fig. 4 it will be seen that a socket 21 is formed in the end of a base 22 of the guide 20 and receives the end of the support tube 16. The end of the tube 16 is fixed in place in the socket 21 by a firm press fit or by welding. When the two parts are assembled the outer end of the tubular core 13 abuts a shoulder 23 on the guide 20.

From the shoulder 23 of the guide 20 to its outermost end the guide consists of a body 24 in which two grooves 25A and 25B are formed. In Fig. 5 the beginning of the first groove 25A can be seen near the shoulder 23 and its outer end appears near the outer end of the body 24.

A middle section of the other groove 25B is also visible in Fig. 5. In Fig. 6 the beginning of the groove 25B and its outer end are visible, as is the middle portion of the other groove 25A. Each groove is of the same regular cross section with a width greater than its depth and having a generally helical configuration with its lead or pitch increasing as the outer end of the guide 20 is approached. Each groove is of the same length along its centerline and they are disposed symmetrically on opposite sides of the guide.

A roller 26A is located at the outer end of the groove 25A and a roller 26B is located at the outer end of the groove 25B. As shown in Fig. 3 the guide 20 is hollow and has an inner bore 28 extending through its length.

It is important that the grooves 25A and 25B are of equal length along their centerlines. It is also preferred that the groove 25A begin exactly one hundred and eighty degrees around the surface of the guide 20 from the groove 25B. The groove 25A thus begins with an upstanding edge 29A in the body 24 of the guide, and the groove 25B begins with an upstanding edge 29B in the body 24 of the guide.

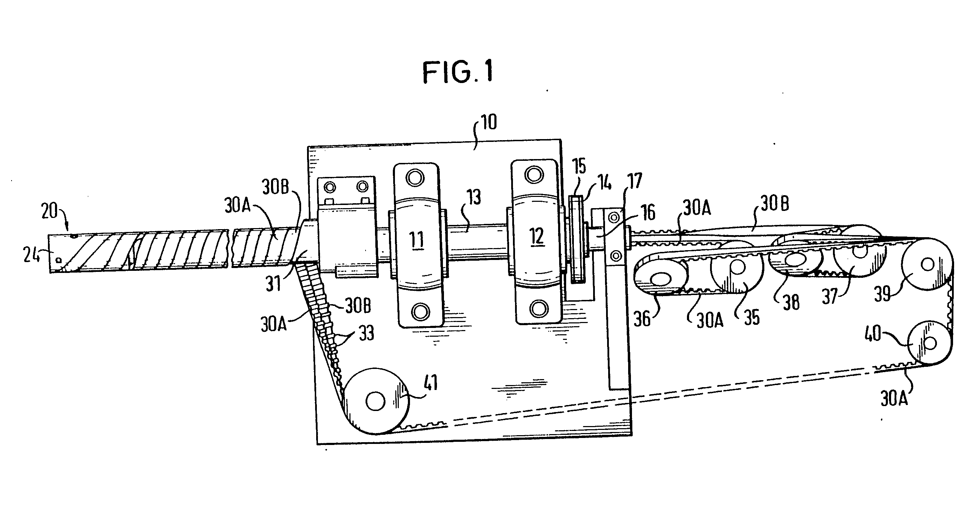

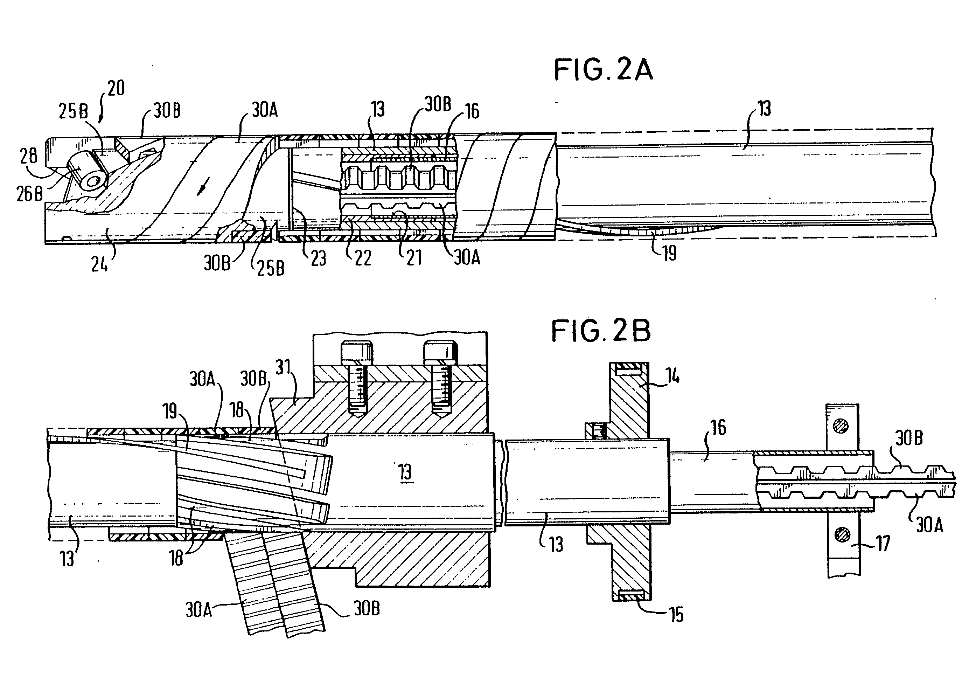

Referring particularly to Figs. 1 to 3, the apparatus includes a pair of closed-loop belts 30A and 30B. The belt 30A can be referred to as the first or forward belt and the belt 30B can be referred to as the second or rearward belt. Each has the same cross-sectional configuration which in turn is the same as the cross-sectional configuration of the grooves 25A and 25B. They are wrapped around the mandrel core 13 at a feed cam 31 which has a planar working surface facing the opposite end of the core at an angle ninety degrees less than the helix angle of the key 19. The feed cam 31 always engages the second or rearward belt 30B, the first or forward belt 30A always being spaced away from the cam by the belt 30B. Lateral gripping teeth 33 are formed on the underside of each of the belts 30A and 30B and are registerable with the drive teeth 18 and the key 19. Since the drive teeth 18 are somewhat longer than the combined width of the belts, the belts are positively gripped by the rotating core 13 at the drive teeth 18. It is the function of the key 19 to maintain the belt convolutions of a uniform diameter so that they slide easily along the surface of the core 13.

With every turn of the core 13 additional paired convolutions of the belts 30A and 30B are wrapped about the core and are urged forwardly by the cam 31. The convolutions adjoin one another side-by-side and thus form a circumferentially complete mandrel surface. When the convolutions reach the outer end of the mandrel they enter the grooves in the guide 20. The first convolution to do so is that on the first or forward belt 30A. It is separated from the adjoining convolution of the belt 30B by the edge 29A and enters the groove 25A. A half turn later of the core 13 the convolution on the second or rearward belt 30B is separated from the following convolution of the first belt 30A by the edge 39B and enters the groove 25B. The belt 30A then passes around the roller 26A and back into the interior of the guide 20 through the bore 28. The belt 30B travels in a similar manner around the roller 26B and back into the bore 28. Inside the core 13 and throughout the return path the two belts are face-to-face with their teeth directed outwardly as seen in Fig. 3.

When the belts emerge at the inner end of the supporting member as shown in Fig. 1, belt 30A is directed around pulleys 35 and 36 while the belt 30B is directed around the pulleys 37 and 38. They are brought back together side-by-side with their teeth facing inwardly at a double pulley 39 then around a second double pulley 40 and another double pulley 41, from which they are directed back around the core 13 adjacent the cam 31.

It is clear in this design that adjoining convolutions of the belts 30A and 30B are stationary with respect to one another as they move the length of the mandrel and approach the guide 20. The design of the mandrel and its guide 20 is in all respects symmetrical by this arrangement and the drag or friction on the two points is substantially identical. This would not be the case if the grooves 25A and 25B were of unequal length or if they did not have the same configuration about the guide 20.

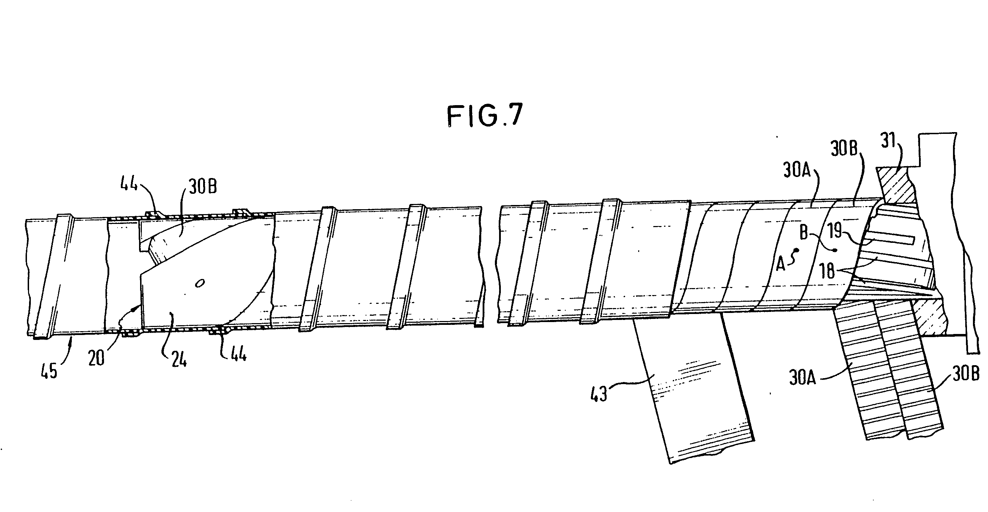

In Fig. 7 the formation of a simple design of tubing is shown for purposes of illustrating the function of the double belt mandrel of the invention. A strip 43 of flexible material such as plastic is applied about the mandrel surface formed by the belts 30A and 30B just forwardly of the cam 31. The width of the strip 43 is slightly greater than twice the width of each of the belts. With every turn of the mandrel the strip 43 is drawn helically about the mandrel with a slight overlap 44 of its forward edge over the rearward edge of the preceeding turn of the strip. These overlapping edges may be secured by adhesive or other suitable means.

As more turns of the strip 43 are applied they move forwardly along the mandrel with a helical lead or pitch equal to twice the width of one of the belts 30A or 30B. In this manner there emerges from the end a tube 45 having an inside diameter equal to the diameter of the belt convolutions on the mandrel and having a helical form of twice the lead or pitch which could have been made on the single belt mandrel device of the prior art.

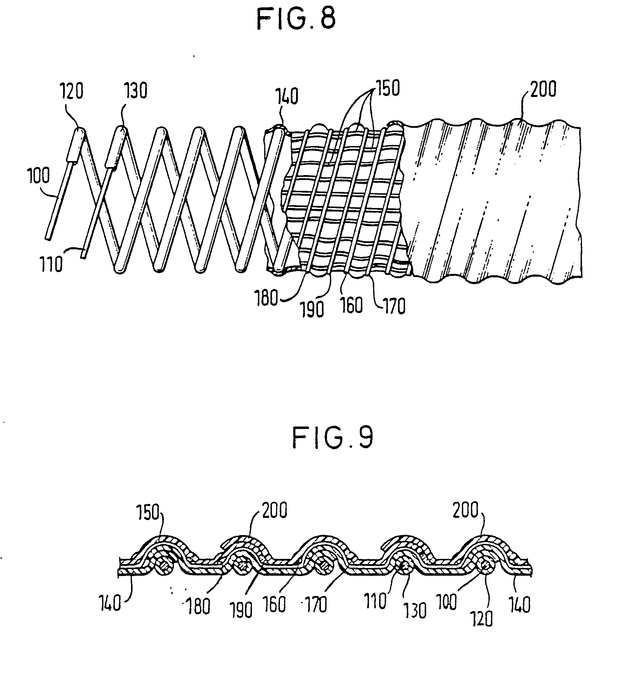

All of the various components of the hose of the invention as shown in Figs. 8 and 9 are most advantageously assembled on the continuously advancing double belt mandrel device referred to in Figs. 1 to 7. Such mandrels are of a diameter range from 32 mm to 38 mm and form hose of corresponding inside dimensions. The elements initially applied to the mandrel are first and second wires 100 and 110. Each wire preferably has a steel core and a copper coating in typical diameters from 1,2 mm to 1,6 mm. The copper content of such wires is usually between 10 and 35 percent by weight. The function of the pair of wires in the finished product is to provide a flexible self-supporting skeleton for the hose and at the same time a pair of electrical conductors which can carry current to the end of the hose.

Each of the two wires 100 and 110 has a helical pitch in the order of 11 mm for current carrying purposes. It is to be emphasized, however, that the invention is applicable to hose which is non-current carrying and in such cases the pitch of each of the wires is somewhat less, perhaps in the order of 8 mm to 10 mm. Each of the wires 100 and 110 is coated with a concentric layer of vinyl plastic 120 and 130 respectively, the thickness of which is in the order of 0,8 mm. It is the purpose of this plastic coating to provide a bondable surface about which the body of the hose is formed and also to provide electrical insulation.

The next element disposed about the pair of helical wires 100 and 110 is an inner vinyl, or vinyl blend with other polymers, plastic strip 140 which is applied with heat or a solvent or both so that it bonds to the coatings 120 and 130. It is wrapped about the wires on the mandrel under tension and at an elevated temperature directly from an extrusion head, so that the inner strip 140 stretches snugly over and between the convolutions of the wires 100 and 110. The extrusion die may appropriately be cross-sectioned to provide a preformed shape to the strip which conforms to the pair of wires and the mandrel surface. The die design may also impart feathered or tapered edges to the strip so that the overlapping edges fair smoothly into one another.

In thickness the inner strip 140 is in the range 0,35 mm to 0,50 mm. The width of the inner plastic strip is slighly greater than the double lead of the pair of wires 100 and 110. As shown on the drawing, the rearward edge of the strip 140 thereby overlies the first wire 100, the central portion of the strip 140 overlies the next adjoining convolution of the second wire 110, and the forward edge of the strip 140 overlies the following convolution of the first wire 100. In this manner the rearward edge of the strip 140 is in direct contact with and bonds to the wire 100 and the forward edge of the strip 140 is in direct contact with and bonds to the rearward edge of the strip 140 on the next convolution of that same wire 100.

After application of the inner strip 140 a plurality of longitudinal cords 150 are applied to the structure. The cords may be of polyester of a size approximately 1100 denier. They are uniformly spaced around the circumference of the hose and are typically from nine to thirty-six in number depending upon the size of the hose. They may be precisely parallel to the axis of the mandrel, and thus of the finished hose as well, or they may be applied at a very slight included angle to the mandrel axis. In any event, they are at least substantially longitudinal with respect to the hose structure because it is their purpose to lend longitudinal strength to the product and prevent it from being stretched to the point of damaging the plastic wall of the hose. The longitudinal cords 150 permit the use of softer wall materials, i.e. having more plasticity, thus providing better flexibility in the finished product with equal or better strength.

To hold the longitudinal cords in place against the inner plastic strip, four strands of helical cords 160 through 190 are applied. The helical cords 160 and 170 are applied snugly to each side of the first wire 100 and the other pair of helical cords 180 and 190 are similarly applied with respect to the second wire 110. They pull the plurality of longitudinal cords 150 downwardly between the convolutions of the reinforcing wires so that the helical and longitudinal cords together assume the same helically convoluted form of the inner strip 140. The composition and size of the helical cords 160 to 190 may be selected as mentioned above with respect to the longitudinal cords depending upon the purpose of the final product.

The last element applied to the mandrel in forming the hose of the invention is an outer vinyl plastic strip 200 which may be of the same width and thickness as the inner plastic strip 140. It overlaps itself over the second wire 110, forward edge portion overlying rearward edge portion, while the central portion overlies the first wire 100. By the use of heat or solvents or both the outer strip is bonded to the inner strip with the longitudinal and helical cords 150 to 190 embedded there between.

In its finished form the total wall thickness of the hose may be from 0,7 mm to 1,0 mm between the wire convolutions where it is of two-ply thickness, and half again as much over the convolutions where maximum wear occurs. A variation which should be apparent is that the inner and outer strips 140 and 200 may be of dissimilar materials, the inner being selected for example for chemical resistance and the outer for abrasion resistance of aesthetic quality.

## Claims

1. A helically fabricated flexible hose comprising
   a) first and second parallel helical wires (100, 110) disposed in double lead fashion with successive convolutions alternating and
   b) an inner plastic strip (140) wrapped helically about the tubular extent defined by the convolutions of the wires (100, 110) and being wider than the double lead of each wire (100, 110) characterized in that
   c) forward and rearward edge portions of said inner plastic strip (140) overlap one another above the convolutions of the first (100) of said wires (100, 110), and

d) an outer plastic strip (200) is wrapped helically about said inner plastic strip (140) and is wider than the double lead of each wire (100, 110) with forward and rearward edge portions of said outer plastic strip (200) overlapping one another above the convolutions of the second (110) of said wires (100, 110).

2. A helically fabricated flexible hose according to claim 1, characterized in that the first and second parallel helical wires (100, 110) are disposed in double lead fashion with successive convolutions of equal diameter alternating and equally spaced.

3. A helically fabricated flexible hose according to claim 1 or 2, characterized in that each of said wires (100, 110) comprises an inner steel core, an outer copper coating, and a coating (120, 130) of dielectric plastic about each of said wires (100, 110).

4. A helically fabricated flexible hose according to any one of claims 1 to 3, characterized in that a plurality of longitudinal reinforcing cords (150) are disposed in equal circumferential spacing about said inner plastic strip (140).

5. A helically fabricated flexible hose according to claim 4, characterized in that respective pairs of helical reinforcing cords (160, 170, 180, 190) are wrapped about said inner plastic strip (140) adjacent each of the convolutions of the respective wires (100, 110) to hold said longitudinal cords (150) against said inner plastic strip (140).

6. A helically fabricated flexible hose according to claim 5, characterized in that said outer plastic strip (200) is wrapped helically about said helical reinforcing cords (150, 160, 170, 180, 190) and is wider than the double lead of each of said wires (100, 110), said plastic outer strip (200) comprising rearward and forward edge portions overlapping one another and being bonded to one another above the convolutions of the second (110) of said wires (100, 110), and a central portion overlapping the intermediate convolution of the first (100) of said wires (100, 110), said rearward edge portion of said outer plastic strip (200) being bonded to the central portion of said inner plastic strip (140).

7. A helically fabricated flexible hose according to claim 3 or any one of claims 4 to 6 when appended to claim 3, characterized in that said inner plastic strip (140) is wrapped helically about said wires (100, 110) and is wider than the double lead of each wire, said inner plastic strip (140) comprising rearward and forward edge portions overlapping one another and being bonded to one another above the convolutions of the first (100) of said wires (100, 110), and a central portion overlapping the intermediate convolution of the second (110) of said wires (100, 110), said rearward edge portion of said inner plastic strip (140) being bonded to the plastic coating (120, 130) of said wires (100, 110).

8. A continuously advancing definite length mandrel device for making a helically fabricated flexible hose of indefinite length, particularly according to any one of claims 1 to 7, comprising a frame (10), a tubular mandrel core (13) axially rotatable with respect thereto, drive means for rotating said core, a plurality of closed loop belts (30A, 30B) each having portions wrapped helically about said core (13) in multiple lead fashion with their convolutions defining a mandrel surface, whereby as the core (13) is rotated additional convolutions of said belts (30A, 30B) are drawn onto one end thereof, feeding means (31) on said frame (10) for urging all of said convolutions toward the opposite end of said core (13), means (19) associated with the belt convolutions for maintaining them in a sliding fit about the core (13), and a belt guide (20) at the opposite end of the core (13) fixed with respect to the frame (10) for collapsing the successive convolutions inwardly and returning each belt (30A, 30B) through the inside of the core (13) toward the first mentioned end thereof, said guide (20) being formed with a plurality of grooves (25A, 25B) of generally helical configuration for receiving the respective plurality of belts (30A, 30B), said mandrel device being characterized in that said grooves (25A, 25B) are all of the same length along their centre lines and are so symmetrically disposed about the guide (20) as to provide an axial spacing between adjacent grooves that increases towards the outer end of the guide (20) in such a way that the outlets of the grooves (25A, 25B) are equally spaced apart in a circumferential direction around said guide (20).

9. A device according to claim 8, characterized in that there are two grooves (25A, 25B) and that the entrances of the two grooves (25A, 25B) are diametrically spaced apart in a common plane.

10. A device according to claim 8 or 9, characterized in that the respective grooves (25A, 25B) are of the same cross-section as the respective belts (30A, 30B).

**Revendications**

1. Tuyau flexible fabriqué en hélice, comprenant un premier et un second fils hélicoïdaux parallèles (100, 110) disposés en double pas avec des spires successives alternées et une bande intérieure de matière plastique (140) enroulée en hélice autour de la longueur tubulaire définie par les spires des fils (100, 110) et plus large que le double pas de chaque fil (100, 110) caractérisé en ce que des parties de bords avant et arrière de ladite bande intérieure de matière plastique (140) se chevauchant entre elles au-dessus des spires du premier (100) des deux fils (100, 110) et une bande extérieure de matière plastique (200) étant enroulée en hélice autour de ladite bande intérieure de matière plastique (140) et étant plus large que le double pas de chaque fil (100, 110) avec des parties de bords avant et arrière de ladite bande extérieure en matière plastique (200) se chevauchant entre elles au-dessus des spires du second (110) desdits fils (100, 110).

2. Tuyau flexible fabriqué en hélice selon la revendication 1, caractérisé en ce que le premier et le second fils hélicoïdaux parallèles (100, 110) sont disposés en double pas, avec des spires successives de même diamètre alternées et également espacées.

3. Tuyau flexible fabriqué en hélice selon la revendication 1 ou 2, caractérisé en ce que chacun desdits fils (100, 110) comporte une âme d'acier intérieure, un revêtement de cuivre extérieur et un revêtement (120, 130) de matière plastique isolante autour de chacun desdits fils (100, 110).

4. Tuyau flexible fabriqué en hélice selon l'une quelconque des revendications 1 à 3, caractérisé en ce que plusieurs cordons longitudinaux de renforcement (150) sont disposés à écartement circonférentiel égal autour de ladite bande intérieure en matière plastique (140).

5. Tuyau flexible fabriqué en hélice selon la revendication 4, caractérisé en ce que des paires respectives de cordons de renforcement hélicoïdaux (160, 170, 180, 190) sont enroulées autour de ladite bande en matière plastique (140) près de chacune des spires des fils respectifs (100, 110) pour maintenir lesdits cordons longitudinaux (150) contre ladite bande intérieure en matière plastique (140).

6. Tuyau flexible fabriqué en hélice selon la revendication 5, caractérisé en ce que ladite bande extérieure en matière plastique (200) est enroulée en hélice autour desdits cordons de renforcement hélicoïdaux (150, 160, 170, 180, 190), et étant plus large que le double pas de chacun desdits fils (100, 110) ladite bande extérieure (200) en matière plastique comportant des parties de bords avant et arrière se chevauchant entre elles et étant collées l'une sur l'autre au-dessus des spires du second (110) desdits fils (100, 110) et une partie centrale recouvrant la spire intermédiaire du premier (100) desdits fils (100, 110) la partie de bord arrière de ladite bande extérieure en matière plastique (200) étant collée sur la partie centrale de ladite bande intérieure en matière plastique (140).

7. Tuyau flexible fabriqué en hélice selon la revendication 3 ou l'une quelconque des revendications 4 à 6 dépendant de la revendication 3, caractérisé en ce que ladite bande intérieure de matière plastique (140) est enroulée en hélice autour desdits fils (100, 110) et est plus large que le double pas de chaque fil, ladite bande intérieure en matière plastique (140) comprenant des parties de bords avant et arrière se chevauchant entre elles et étant collées l'une sur l'autre au-dessus des spires du premier (100) desdits fils (100, 110) et une partie centrale recouvrant la spire intermédiaire du second (110) desdits fils (100, 110), ladite partie de bord arrière de ladite bande intérieure en matière plastique (140) étant collée sur le revêtement en matière plastique (120, 130) desdits fils (100, 110).

8. Dispositif à mandrin de longueur définie et à avance continue destiné à réaliser un tuyau flexible fabriqué en hélice d'une longueur indéfinie, notamment selon l'une quelconque des revendications 1 à 7, et comportant un bâti (10), un noyau de mandrin tubulaire (13) pouvant tourner axialement par rapport au bâti, un dispositif d'entrainement pour faire tourner le noyau, plusieurs courroies en boucle fermée (30A, 30B) comprenant chacune des parties enroulées en hélice autour dudit noyau (13) à pas multiples avec leurs spires définissant une surface de mandrin de manière que lorsque le noyau (13) est mis en rotation, des spires supplémentaires desdites courroies (30A, 30B) soient tirées sur l'une de ces extrémités, un dispositif d'avance (31) sur ledit bâti (10) pour pousser toutes lesdites spires vers les extrémités opposées desdits noyaux (13), un dispositif (19) associé avec les spires des courroies pour les maintenir en appui coulissant sur le noyau (13) et un guide de courroie (20) à l'extrémité opposée du noyau (13) fixe par rapport au bâti (10) pour tasser les spires successives vers l'intérieur et pour ramener chaque courroie (30A, 30B) par l'intérieur du noyau (13) vers sa première extrémité, ledit guide (20) étant formé avec plusieurs rainures (25A, 25B) de forme générale hélicoïdale pour recevoir les courroies respectives (30A, 30B), dispositif à mandrin caractérisé en ce que lesdites rainures (25A, 25B) ont toutes la même longueur suivant leurs axes et sont disposées symétriquement autour du guide (20) de manière à assurer un écartement axial entre des rainures voisines qui augmente vers l'extrémité extérieure du guide (20) et de manière que les sorties des rainures (25A, 25B) soient également espacées dans une direction circonférentielle autour du guide (20).

9. Dispositif selon la revendication 8, caractérisé en ce que deux rainures (25A, 25B) sont prévues, les entrées des deux rainures (25A, 25B) étant espacées diamétralement dans un plan commun.

10. Dispositif selon la revendication 8 ou 9, caractérisé en ce que les rainures respectives (25A, 25B) ont la même section que les courroies respectives (30A, 30B).

**Patentansprüche**

1. Schraubenförmig gewickelter biegsamer Schlauch mit

a) einem ersten und einem zweiten parallelen schraubenförmig gelegten Draht (100, 110), die zweigängig angeordnet sind, wobei sich die aufeinanderfolgenden Windungen abwechseln, und

b) einem inneren Kunststoffband (140), das schraubenförmig um das rohrförmige Längenstück gewickelt ist, das von den Windungen der Drähte (100, 110) gebildet wird, und das breiter ist als der Doppelgang jedes Drahts (100, 110), dadurch gekennzeichnet, daß

c) der vordere und hintere Randabschnitt des inneren Kunststoffbandes (140) einander über den Windungen des ersten Drahts (100) der Drähte (100, 110) überlappen, und

e) ein äußeres Kunststoffband (200) schraubenförmig um das innere Kunststoffband (140) gewickelt ist und breiter ist als die doppelte Ganghöhe eines jeden Drahts (100, 110), wobei der vordere und hintere Randabschnitt des äußeren Kunststoffbandes (200) einander über den Windungen des zweiten Drahts (110) der Drähte (100, 110) überlappen.

2. Schruabenförmig gewickelter biegsamer Schlauch nach Anspruch 1, dadurch gekennzeichnet, daß der erste und der zweite parallele schraubenförmig gelegte Draht (100, 110) zweigängig angeordnet sind, wobei sich aufeinanderfolgende Windungen mit gleichem Durchmesser abwechselnd und im gleichen Abstand angeordnet sind.

3. Schraubenförmig gewickelter biegsamer Schlauch nach Anspruch 1 oder 2, dadurch gekennzeichnet, daß jeder der Drähte (100, 110) einen inneren Stahlkern, eine äußere Kupferbeschichtung und einen Überzug (120, 130) aus dielektrischem Kunststoff um jeden der Drähte (100, 110) aufweist.

4. Schraubenförmig gewickelter beiegsamer Schlauch nach einem der Ansprüche 1 bis 3, dadurch gekennzeichnet, daß eine Vielzahl von sich in Längsrichtung erstreckenden verstärkenden Corden (150) in gleichem Umfangsabstand um das innere Kunststoffband (140) herum angeordnet ist.

5. Schraubenförmig gewickelter biegsamer Schlauch nach Anspruch 4, dadurch gekennzeichnet, daß jeweilige Paare von schraubenförmigen verstärkenden Corden (160, 170, 180, 190) um das innere Kunststoffband (140) angrenzend an jede der Windungen der jeweiligen Drähte (100, 110) gewickelt sind, um die sich in Längsrichtung erstreckenden Corde (150) gegen das innere Kunststoffband (140) zu halten.

6. Schraubenförmig gewickelter biegsamer Schlauch nach Anspruch 5, dadurch gekennzeichnet, daß das äußere Kunststoffband (200) schraubenförmig um die schraubenförmigen verstärkenden Corde (150, 160, 170, 180, 190) gewickelt ist und breiter ist als die doppelte Ganghöhe eines jeden der Drähte (100, 110), wobei das äußere Kunststoffband (200) einen hinteren und einen vorderen Randabschnitt, die einander überlappen und aneinander über den Windungen des zweiten Drahts (110) der Drähte (100, 110) haftend verbunden sind, sowie einen Mittelabschnitt aufweist, der die Zwischenwindung des ersten Drahts (100) der Drähte (100, 110) überlappt, wobei der hintere Randabschnitt und das äußere Kunststoffband (200) an dem Mittelabschnitt des inneren Kunststoffbandes (140) haftend befestigt sind.

7. Schraubenförmig gewickelter biegsamer Schlauch nach Anspruch 3 oder einem der Ansprüche 4 bis 6, wenn er an Anspruch 3 angehängt ist, dadurch gekennzeichnet, daß das innere Kunststoffband (140) schraubenförmig um die Drähte (100, 110) gewickelt ist und breiter ist als die doppelte Ganghöhe eines jeden Drahtes, wobei das innere Kunststoffband (140) einen hinteren und einen vorderen Randabschnitt, die einander überlappen und haftend aneinander über den Windungen des ersten Drahts (100) der Drähte (100, 110) befestigt sind, und einen zentralen Abschnitt aufweist, der die Zwischenwindung des zweiten Drahts (110) der Drähte (100, 110) überlappt, wobei der hintere Randabschnitt und das innere Kunststoffband (140) haftend an der Kunststoffbeschichtung (120, 130) der Drähte (100, 110) befestigt sind.

8. Sich kontinuierlich vorwärtsbewegende Dornvorrichtung festgelegter Länge zur Herstellung eines schraubenförmig gewickelten biegsamen Schlauchs unbegrenzter Länge, insbesondere nach einem der Ansprüche 1 bis 7, mit einem Rahmen (10), einem rohrförmigen Dornkern (13), der axial bezüglich des Rahmens drehbar ist, mit einer Antriebseinrichtung zum Drehen des Kerns, mit einer Vielzahl von eine geschlossene Schleife bildenden Riemen (30A, 30B), von denen jeder Abschnitte aufweist, die schraubenförmig um den Kern (13) mehrfachgängig gewickelt sind, wobei ihre Windungen eine Dornoberfläche bilden, wodurch bei Drehung des Kerns (13) zusätzliche Windungen der Riemen (30A, 30B) auf eine Ende davon gezogen werden, mit Vorschubeinrichtungen (31) an dem Rahmen (10), um alle Windungen zum gegenüberliegenden Ende des Kerns (13) zu drücken, mit den Riemenwindungen zugeordneten Einrichtungen (19), um sie in einem Gleitsitz um den Kern (13) herum zu halten, und mit einer Riemenführung (20) am gegenüberliegenden Ende des Kerns (13), die bezüglich des Rahmens (10) festgelegt ist, um die aufeinanderfolgenden Windungen nach innen kollabieren zu lassen und um jeden Riemen (30A, 30B) durch die Innenseite des Kerns (13) zu dem zuerst genannten Ende davon zurückzuführen, wobei die Führung (20) mit einer Vielzahl von Nuten (25A, 25B) von insgesamt schraubenförmiger Gestalt versehen ist, um die jeweilige Vielzahl von Riemen (30A, 30B) aufzunehmen, wobei die Dornvorrichtung dadurch gekennzeichnet ist, daß die Nuten (25A, 25B) längs ihrer Mittellinien alle die gleiche Länge haben und derart symmetrisch um die Führung (20) herum angeordnet sind, daß sie einen axialen Abstand zwischen benachbarten Nuten vorsehen, der zum äußeren Ende der Führung (20) hin derart zunimmt, daß die Auslässe der Nuten (25A, 25B) in Umfangsrichtung um die Führung (20) herum gleichen Abstand aufweisen.

9. Vorrichtung nach Amspruch 8, dadurch gekennzeichnet, daß zwei Nuten (25A, 25B) vorhanden sind und daß die Einlässe der beiden Nuten (25A, 25B) in einer gemeinsamen Ebene diametral im Abstand angeordnet sind.

10. Vorrichtung nach Anspruch 8 oder 9, dadurch gekennzeichnet, daß die jeweiligen Nuten (25A, 25B) den gleichen Querschnitt wie die jeweiligen Riemen (30A, 30B) haben.

9

FIG.1

0 005 278

0 005 278

FIG.2A

FIG.2B

2

0 005 278

FIG.3

FIG.4

FIG.5

FIG 6

3

FIG.7

FIG.8

FIG.9